# EUROPEAN PATENT APPLICATION

(11) **EP 4 763 639 A1**
(43) Date of publication of application: **24.06.2026**
(21) Application number: 24220660.5
(22) Date of filing: 17.12.2024
(51) Int. Cl.: B60T 17/00, F01N 1/24

(54) **SILENCER, PNEUMATIC SYSTEM OR COMPONENT, COMMERCIAL VEHICLE, AND METHOD OF EXHAUSTING GAS FROM A PNEUMATIC SYSTEM FOR A VEHICLE**

(71) Applicant: ZF CV Systems Europe BV, 1170 Brüssel (BE)
(72) Inventor: HOLYNSKI, Adrian, 53-520 Wroclaw (PL)
(74) Representative: Copi, Joachim

(57) **Abstract**

A silencer (50) for a vehicle comprises a noise dampening mesh material (40) and a silencer housing component (10) forming a receptacle for the noise dampening mesh material (40). The silencer housing component (10) comprises an outer wall (20) and an end wall (26). The outer wall (20) extends circumferentially around a center axis (13) of the silencer housing component (10). The end wall (26) forms a concavity (29). A retarding structure (30) comprising at least one wall (31, 32, 33, 34) is arranged in the concavity (29) and projects from the end wall (26). The retarding structure (30) is configured to reduce a rate of gas egress through gas outlet passages of the silencer (50).

## Description

The invention relates to a silencer configured for installation in or on a vehicle, such as a commercial vehicle. The invention relates in particular to a silencer configured for use in a pneumatic system of a commercial vehicle or in a pneumatic component of the commercial vehicle.

Pneumatic systems are used on vehicles in a wide variety of applications, including air dryer systems, pneumatic suspension, pneumatic levelling, door actuation systems, and/or braking systems. Silencers are components of pneumatic systems that help reduce noise levels produced by the flow of compressed gas in these systems. Silencers are operative to attenuate or dampen the noise generated by expansion and release of compressed gas. Generally, the function of a silencer is to at least partially absorb and/or dissipate energy of the gas, converting the energy into heat instead of sound.

Silencers in pneumatic systems of vehicles provide various benefits. The benefits include, without limitation, noise reduction, improved compliance with noise pollution regulations, improved working conditions for vehicle operators and/or passengers, and/or enhanced vehicle performance. For illustration, silencers help create a quieter working environment for vehicle operators, reducing the risk of hearing damage and improving overall working conditions. Silencers can also contribute to optimizing the overall performance of the pneumatic system for a vehicle by reducing pressure fluctuations. Overall, silencers in pneumatic systems of vehicles help improve comfort, reduce noise pollution, and optimize the performance of pneumatic systems of vehicles.

DE 10 2009 029968 A1, EP 2 303 659 B1, and DE 10 2008 029489 A1 disclose silencers.

There is a continued need in the art for silencers that are configured to provide a further reduction in noise level during a gas exhaust operation. This applies in particular to a maximum noise generated during an exhaust operation. A further reduction in noise levels, in particular a further decrease in the maximum noise level, is desirable for various reasons, such as ensuring conformity with, or overfulfilling, regulatory noise level limits (e.g., for drivers and/or passengers). Thus, there is a need for an enhanced silencer configured to provide benefits with respect to the attenuation that is attained, and more specifically, that provides improvements with respect to a noise level in an initial phase of an exhaust operation.

It is an object of the invention to provide an improved silencer that provides an effective reduction in noise level during a gas exhaust operation, an improved silencer that provides an effective reduction in noise level, a pneumatic system for a vehicle and/or a pneumatic component and/or a vehicle comprising such a silencer.

According to aspects of the invention, a silencer, a pneumatic system for a vehicle, a pneumatic component for a vehicle, a commercial vehicle, and a method of exhausting gas are disclosed. The dependent claims define preferred embodiments.

According to an aspect of the invention, a silencer for a pneumatic component or a pneumatic system for a vehicle is provided. The silencer comprises a noise dampening mesh material. The silencer further comprises a silencer housing component defining a receptacle for the noise dampening mesh material. The silencer housing component comprises an outer wall extending circumferentially around a center axis of the silencer housing component, the outer wall comprising a first axial end and a second axial end. A mounting structure for mounting the silencer housing component is arranged at the first axial end of the outer wall. Several gas outlet passages are formed through the silencer housing component in at least the outer wall. The silencer housing component further comprises an end wall extending from the second axial end of the outer wall towards the center axis. The silencer housing component comprises a retarding structure configured to reduce a rate of gas outflow through the gas outlet passages during at least part of an exhaust operation. The retarding structure comprises at least one wall arranged in a concavity, wherein the concavity is formed by the end wall, and wherein the retarding structure projects from the end wall towards the first axial end.

Various effects are attained by the silencer. The retarding structure is provided in the concavity formed by the end wall. This constructions provides the following synergistic effects: The provision and arrangement of the retarding structure leaves the construction space available for the noise dampening mesh material unaltered, while contributing to a noise level reduction in at least an initial phase of the exhaust operation. More specifically, the cavity in which the retarding structure is arranged provides extra volume into which gas can flow, with the retarding structure preventing the gas to exit the outlet passages along straight flow lines. The retarding structure provides baffle walls within the cavity, which force gas that has entered the concavity to pass along a gas flow path that, due to the retarding structure, has a geometry (such as tortuous or labyrinth-type) that slows down egress of at least a fraction of the gas in the initial phase of the exhaust operation. This affects the pressure drop in the initial phase of the exhaust operation and reduces the maximum noise level generated, as compared to a silencer that does not have the concavity or the retarding structure.

Preferably, the silencer may be configured such that the first axial end extends along a first plane perpendicular to the center axis, with each of the several gas outlet passages having a first passage end and a second passage end, the second passage end being spaced from the first plane by a greater distance than the first passage end. The silencer may be configured such that the second passage end is located on a second plane perpendicular to the center axis, and that the end wall comprises a concavity forming portion that form the concavity and that extends at a greater distance from the first plane than the second plane.

Thereby, the silencer has a configuration that does not reduce the construction space available for accommodating the noise dampening mesh material, while being capable of accommodating the retarding structure in a concavity of the end wall. While a height of the silencer along the center axis is increased by this configuration, a radius of the silencer is not increased. This facilitates installation and enables the silencer to be retrofitted readily in pneumatic systems or pneumatic components having a legacy silencer configuration.

Preferably, the silencer may be configured such that a depth of the concavity divided by a spacing between the second plane and the first plane is at least 0.1, at least 0.15, or at least 0.2, the depth being measured parallel to the center axis between the second plane and a point on an inner surface of the end wall that has a spacing from the second plane that is maximum among all points on the inner surface of the end wall.

Thereby, an efficient reduction in pressure drop during at least an initial phase of the exhaust operation is attained. This construction contributes to reducing the maximum noise level during an exhaust operation, and thereby further improves noise attenuation.

Preferably, the silencer may be configured such that at least one wall is dimensioned such that it does not project beyond the second plane towards the first plane, and/or that it does not intersect the second plane.

Thereby, an efficient reduction in pressure drop during at least an initial phase of the exhaust operation is attained, while allowing the at least one wall to also act as support for the noise dampening mesh material. This construction contributes to reducing the maximum noise level during an exhaust operation, and thereby further improves noise attenuation.

Preferably, the silencer may be configured such that each of the at least one wall comprises a wall base at the end wall and a free end rim, wherein the free end rim abuts on the noise dampening mesh material.

Thereby, an efficient reduction in pressure drop is attained during at least an initial phase of the exhaust operation using a construction in which the at least one wall acting as support for the noise dampening mesh material. This configuration contributes to reducing the maximum noise level during an exhaust operation, using a simple and weight-efficient construction.

Preferably, the silencer may be configured such that the at least one wall comprises several walls projecting from the end wall, wherein free end rims of the several walls are flush with each other (i.e., colinearly aligned so as to extend in a common plane) and in abutment on noise dampening mesh material.

Thereby, an efficient reduction in pressure drop during at least an initial phase of the exhaust operation is attained, with the at least one wall acting as support for the noise dampening mesh material. This construction contributes to reducing the maximum noise level during an exhaust operation, using a simple and weight-efficient construction.

Preferably, the silencer may be configured such that the wall base is spaced from the noise dampening mesh material.

Thereby, at least part of the concavity is free of the noise dampening mesh material. This allows a fraction of a gas that is to be exhausted through the silencer to flow in the concavity along flow paths created by the at least one wall. This contributes to a noise attenuation in which the maximum noise level encountered during the exhaust operation can be reduced.

Preferably, the silencer may be configured such that the at least one wall forms gas flow channels comprising angled portions and/or curved portions.

Thereby, the fraction of the gas flowing through the concavity is forced along gas flow paths that retard its egress through the outlet passages. This contributes to a noise attenuation in which the maximum noise level encountered during the exhaust operation can be reduced.

Preferably, the silencer may be configured such that gas flow channels formed by the at least one wall comprise straight portions.

Thereby, a simple construction is attained, while the at least one wall contributes to a noise attenuation.

Preferably, the silencer may be configured such that the at least one wall forms gas flow channels comprising angled portions and/or curved portions.

Thereby, the fraction of the gas flowing through the concavity is forced along gas flow paths that retard its egress through the outlet passages. This contributes to a noise attenuation in which the maximum noise level encountered during the exhaust operation can be reduced.

Preferably, the silencer may be configured such that the at least one wall comprises several sequences of walls each having, in a viewing direction parallel to the center axis, a triangular shape.

Thereby, a tortuous or labyrinth-type gas flow geometry can be generated in an efficient manner while securely retaining the noise dampening mesh material. This contributes to good noise attenuation, in particular by reducing a noise level during the initial phase of the exhaust operation.

Preferably, the silencer may be configured such that the several sequences of walls may have vertices at a connection of legs of the triangular shape, wherein straight lines along which the vertices are arranged for different ones of the several sequences are angled relative to each other.

Thereby, a tortuous or labyrinth-type gas flow geometry can be generated in an efficient manner while securely retaining the noise dampening mesh material. This contributes to good noise attenuation, in particular by reducing a noise level during the initial phase of the exhaust operation.

Preferably, the silencer may be configured such that the at least one wall comprises or consists of a single wall having a spiral shape when viewed in a viewing direction parallel to the center axis.

Thereby, a spiral gas flow geometry can be generated in an efficient manner while securely retaining the noise dampening mesh material. This contributes to good noise attenuation, in particular by reducing a noise level during the initial phase of the exhaust operation.

Preferably, the silencer may be configured such that part or all of the gas flow channels is free from the noise dampening mesh material.

Thereby, good noise attenuation is attained by a simple construction in which the noise dampening mesh material is supported on the at least one wall, but does not protrude into the gas flow channels defined by the at least one wall of the retarding structure. This contributes to a noise attenuation in which the maximum noise level encountered during the exhaust operation can be reduced.

Preferably, the silencer may be configured such that the at least one wall mechanically supports and retains the noise dampening material.

Thereby, good noise attenuation is attained by a simple and weight-efficient construction.

Preferably, the silencer may be configured such that the outer wall, the end wall, and the at least one wall are formed as a unitary molded body.

Thereby, the silencer housing component can be formed in an efficient manner using, e.g., injection molding techniques while providing ease of installation and enhanced noise attenuation.

Preferably, the silencer may be configured such that the outer wall and the end wall are formed as a unitary molded body, with the at least one wall of the retarding structure being an insert arranged in the unitary molded body.

Thereby, the silencer housing component can be formed in an efficient manner while providing ease of installation and enhanced noise attenuation.

According to a further aspect of the invention, a pneumatic system or a pneumatic component for a vehicle (e.g., for a commercial vehicle) is provided. The pneumatic system or pneumatic component comprises the silencer according to any aspect or embodiment disclosed herein.

Thereby, a pneumatic system or pneumatic component is provided that affords good noise attenuation during an exhaust operation using a silencer having a simple construction.

Preferably, the pneumatic system or pneumatic component is an air dryer or an auxiliary power unit (APU) for a commercial vehicle.

Thereby, the air dryer or APU affords good noise attenuation during an exhaust operation, using a simple construction.

Preferably, the pneumatic system may comprise any one or any combination of: a supply system for supplying compressed air; a levelling system; a suspension system; a braking system; a pneumatic door actuation system.

Thereby, more efficient noise attenuation is attained for such pneumatic systems.

A pneumatic component for a vehicle according to an aspect of the invention comprises a vehicle component housing, a solenoid valve disposed in the housing, and the silencer according to any aspect or embodiment, wherein the silencer housing component is engaged with a mating engagement structure of the vehicle component housing.

Thereby, the silencer housing component can be mounted directly on a housing of the pneumatic component that comprises a solenoid valve therein. Thus, a compact construction is attained in combination with efficient noise reduction.

Preferably, the vehicle component housing comprises a pneumatic consumer port for fluidly connecting the pneumatic component to at least one pneumatic consumer. Preferably, the vehicle component housing comprises an exhaust port. Preferably, the silencer housing component is attached to the vehicle component housing at the exhaust port.

Thereby, the silencer housing component can be provided directly on a housing of the pneumatic component so as to reduce noise levels during an exhaust operation.

Preferably, the pneumatic component may comprise a controller and/or other control electronics accommodated in the vehicle component housing and configured to selectively energize the solenoid valve.

Thereby, the silencer housing component can be provided directly on a housing of a pneumatic component so as to reduce noise levels during an exhaust operation.

Preferably, the pneumatic component may be an air dryer comprising an air dryer body and an air dryer cartridge configured to be engaged with and disengaged from the air dryer body reversibly in a destruction-free manner.

Thereby, the air dryer affords good noise attenuation during an exhaust operation, using a compact and simple construction.

A commercial vehicle according to an aspect of the invention comprises the silencer or the pneumatic system or pneumatic component for a vehicle disclosed herein.

Thereby, a commercial vehicle is provided which utilizes the and, thus, attains good noise reduction, in particular by further reducing the maximum noise level in an initial phase of the exhaust operation. The commercial vehicle is configured such that the silencer housing component comprises the retarding structure, as discussed herein. Thereby, noise pollution can be suppressed more effectively than with conventional silencer configurations.

According to a further aspect of the invention, a method of exhausting gas from a pneumatic system for a vehicle comprises exhausting the gas through a silencer. The silencer comprises a silencer housing component defining a receptacle for the noise dampening mesh material. The silencer housing component comprises an outer wall extending circumferentially around a center axis of the silencer housing component. The outer wall comprises a first axial end and a second axial end. A mounting structure for mounting the silencer housing component is arranged at the first axial end of the outer wall. Several gas outlet passages are formed through the silencer housing component in at least the outer wall. The silencer housing component comprises an end wall extending from the second axial end of the outer wall towards the center axis. The silencer housing component comprises a retarding structure comprising at least one wall arranged in a concavity, wherein the concavity is formed by the end wall, and wherein the at least one wall projects from the end wall towards the first axial end. Exhausting the gas comprises reducing a rate of gas outflow through the gas outlet passages during at least part of an exhaust operation by the retarding structure.

Various effects are attained by the method. The retarding structure is provided in the concavity formed by the end wall and reduces a rate of gas outflow during at least part of an exhaust operation. Thereby, the retarding structure leaves the construction space available for the noise dampening mesh material unaltered, while contributing to a noise level reduction in at least an initial phase of the exhaust operation. More specifically, the cavity in which the retarding structure is arranged provides extra volume into which gas can flow, with the retarding structure preventing the gas to exit the outlet passages along straight flow lines. The retarding structure provides baffle walls within the cavity, which force gas that has entered the concavity to pass along a gas flow path that, due to the retarding structure, has a geometry (such as tortuous or labyrinth-type) that slows down egress of at least a fraction of the gas in the initial phase of the exhaust operation. This affects the pressure drop in the initial phase of the exhaust operation and reduces the maximum noise level generated, as compared to a silencer that does not have the concavity or the retarding structure.

Preferably the retarding structure may reduce a pressure drop at least in an initial phase of the exhaust operation.

Thereby, a maximum noise level during is decreased during at least the initial phase of the exhaust operation.

Optional features of the method of exhausting gas and the effects attained thereby correspond to the optional features discussed in association with the silencer, the pneumatic component for a vehicle, the pneumatic system for a vehicle, and/or the commercial vehicle.

Preferably, the method may be performed by or using the silencer, the pneumatic component, the pneumatic system for a vehicle, and/or the commercial vehicle disclosed herein.

According to a further aspect of the invention, there is provided a method of using the silencer, the pneumatic component for a vehicle, the pneumatic system for a vehicle, and/or the method of exhausting gas to establish a gas flow in which at least a fraction of gas entering the silencer is directed, by the retarding structure, along gas flow paths within the cavity that retard an egress of the gas passing through the concavity in at least an initial phase of the exhaust operation

Thereby, a reduction in a maximum noise level is attained using a compact and simple silencer configuration.

Various effects and advantages are attained by the silencer, the pneumatic component for a vehicle, and the systems and methods disclosed herein, including a reduction in maximum noise level encountered in an initial phase of an exhaust using a simple construction.

Further embodiments and configurations are defined by the dependent claims. These and other aspects of the invention will be apparent from and further explained with reference to the embodiments described herein with reference to the accompanying drawings, in which:
Fig. 1 is a cross-sectional view of a silencer according to an embodiment;
Fig. 2 is a perspective view of an implementation of the silencer housing component of the silencer;
Fig. 3 is a partial cross-sectional view of the silencer housing component of Fig. 2;
Fig. 4 is a perspective detail view of the silencer housing component of Fig. 2;
Fig. 5 is a plan view of the silencer housing component of Fig. 2;
Fig. 6 is a plan view of a further implementation of the silencer housing component of the silencer according to an embodiment;
Fig. 7 is a plan view of another implementation of the silencer housing component of the silencer according to an embodiment;
Fig. 8 is a cross-sectional view of the silencer to illustrate operation of the silencer;
Fig. 9 is a graph representing a pressure drop during an exhaust operation;
Fig. 10 is a schematic representation of a pneumatic system comprising the silencer housing component according to an embodiment;
Fig. 11 is a schematic representation of a component of a pneumatic system for a vehicle comprising the silencer housing component according to an embodiment;
Fig. 12 is a schematic representation of a pneumatic system for a vehicle configured as a gas supply system comprising the silencer housing component according to an embodiment;
Fig. 13 is a schematic representation of a pneumatic system for a vehicle configured as a gas supply system comprising the silencer housing component according to an embodiment;
Fig. 14 is a schematic representation of a pneumatic system for a vehicle configured as a gas supply system comprising the silencer housing component according to an embodiment;
Fig. 15 is a schematic representation of a pneumatic system for a vehicle configured as a pneumatic or electropneumatic braking system comprising the silencer housing component according to an embodiment;
Fig. 16 is a schematic representation of a pneumatic system for a vehicle configured as a levelling system comprising the silencer housing component according to an embodiment;
Fig. 17 is a schematic representation of a pneumatic system for a vehicle configured as a gas spring system comprising the silencer housing component according to an embodiment;
Fig. 18 is a schematic representation of a commercial vehicle;
Fig. 19 is a flow chart of a method of exhausting gas; and
Fig. 20 is a flow chart of a use method.

Embodiments of the invention will be described with reference to the drawings. In the drawings, similar or identical reference signs designate elements with similar or identical configuration and/or function.

As used herein, the term "silencer" refers to a component or assembly which is configured to mitigate noise levels as gas passes through the silencer. The silencer may be configured to reduce noise levels as gas is being exhausted. The silencer may be configured to convert at least part of a kinetic energy of a gas flow into heat (e.g., of a damping material received in the silencer housing component) to contribute to the noise reduction.

As used herein, the term "gas" encompasses a gaseous mixture. The gas may in particular be air, without being limited thereto.

As used herein, the term "pneumatic" component encompasses an electropneumatic component, and the term "pneumatic" system encompasses an electropneumatic system.

As used herein, the term "exhaust" refers to discharging of gas from a pneumatic component or a pneumatic system to ambient atmosphere.

As used herein, the term "retarding structure" refers to at least one wall projecting from an end wall of a silencer and configured to retard an egress of gas passing the retarding structure, e.g., by allowing the gas to expand in the space along the at least one wall and by defining a non-linear (e.g., tortuous and/or labyrinth-type) gas flow path.

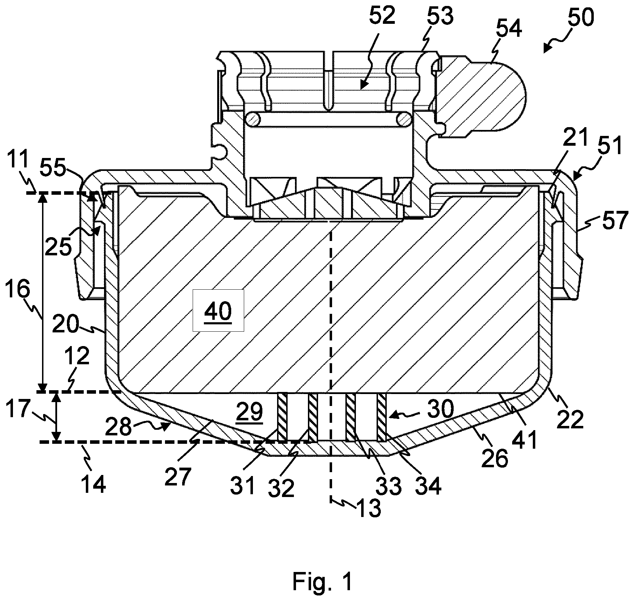

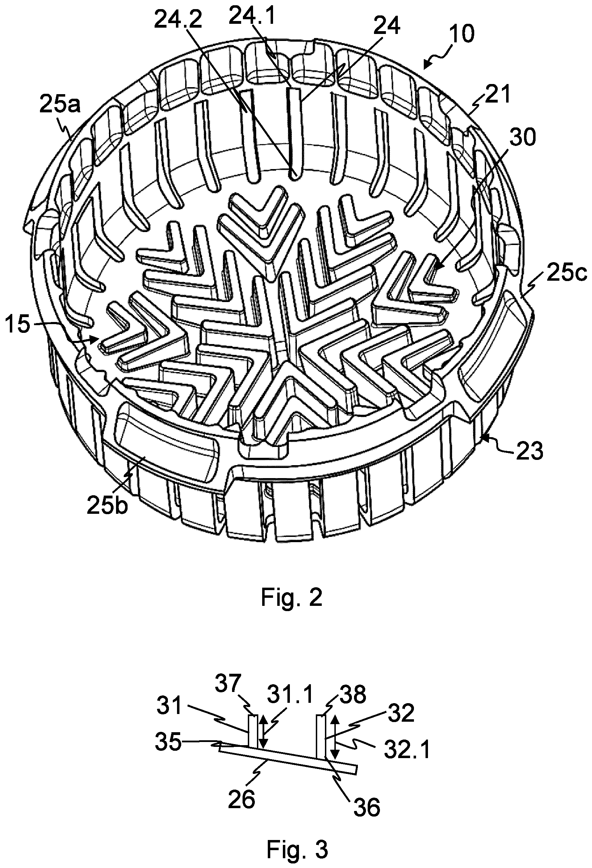

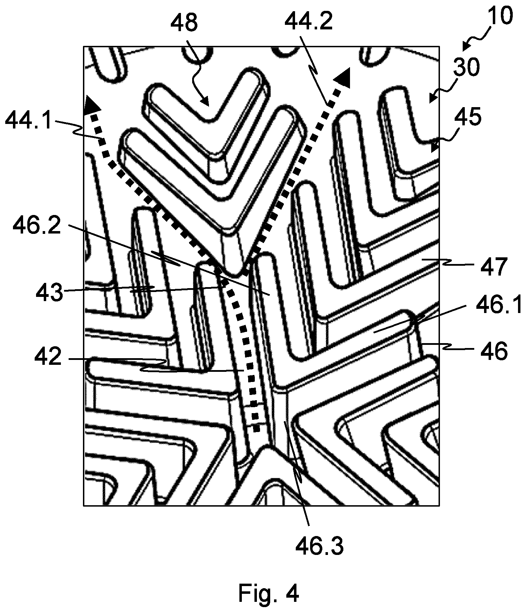

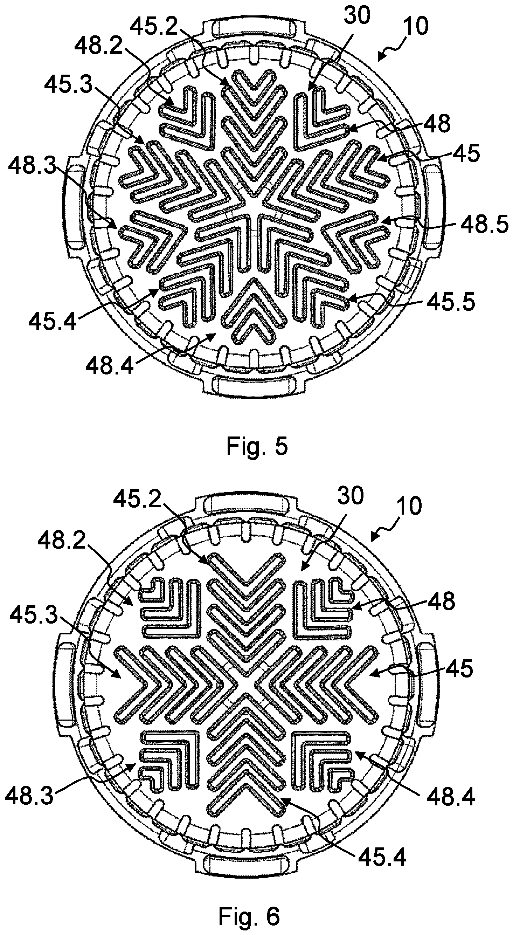

Fig. 1 is a cross-sectional view of a silencer 50 according to an embodiment of the invention. Fig. 2 is a perspective view of an implementation of a silencer housing component 10 of the silencer 50. Fig. 3 is a partial cross-sectional view of the silencer housing component 10 of Fig. 2. Fig. 4 is a perspective detail view of the silencer housing component 10 of Fig. 2. Fig. 5 is a plan view of the silencer housing component 10 of Fig. 2. The silencer 50 comprises the silencer housing component 10 that defines a receptacle 15. The silencer 50 comprises a noise dampening mesh material 40 received in the receptacle 15. The silencer 50 comprises a mating housing component configured for mating engagement with the silencer housing component 10. As illustrated in Fig. 1, the mating housing component may be a mating housing component 51 configured as a lid configured to engage with the silencer housing component 10. The mating housing component may also be configured as a pneumatic component housing of, e.g., an APU or air dryer, with which the silencer housing component 10 with the noise dampening mesh material 40 may be directly engaged.

The silencer housing component 10 has a center axis 13. The silencer housing component 10 comprises an outer wall 20 and an end wall 30. The outer wall 20 extends circumferentially around the center axis 13. The outer wall 20 may comprise a cylindrical or frustoconical outer wall portion. The outer wall 20 extends along the center axis from a first axial end 21 at a first plane 11 to a second axial end 22 at a second plane 12. The first axial end 21 is an axial end at which a mounting structure 25 for mounting the silencer housing component 10 is provided. The mounting structure 25 may comprise several engagement members 25a, 25b, 25c arranged on the first axial end 21. The first axial end 21 is the axial end at which a gas flow enters the silencer housing component 10. The second axial end 22 is another axial end at which several gas outlet passages 23 are arranged. At least some of the gas outlet passages 23 may respectively have a slot configuration and extend from a first passage end 24.1 to a second passage end 24.2, with the second passage end 24.2 being spaced from the first plane 11 by a greater distance than the first passage end 24.1. The first passage end 24.1 and the second passage end 24.2 are schematically illustrated for a gas outlet passage 24, but several other or all of the gas outlet passages 23 may have the same configuration, i.e., slot-like with an extension from a first passage end 24.1 to a second passage end 24.2. The several gas outlet passages 23 may be regularly or irregularly distributed around the circumference of the outer wall 20.

The end wall 26 extends generally transverse to the center axis 13. The end wall 26 is shaped so as to form a concavity 29. The end wall 26 comprises a concavity forming portion 28 that is curved or angled relative to the second plane 12 to define the concavity 29. The concavity forming portion 28 may have other configurations. For illustration. The concavity forming portion 28 may be composed of planar portions that extend from outer wall 20 and which provide a space (the concavity 29) for accommodating the at least one wall 31, 32, 33, 34. The silencer housing component 10 comprises a retarding structure 30 comprising at least one wall 31, 32, 33, 34 projecting from the end wall 26 towards the first plane 11. The at least one wall 31, 32, 33, 34 of the retarding structure 30 may project from an inner surface 27 of the end wall 26 (i.e., the inner surface 27 facing towards the noise dampening mesh material 40). The at least one wall 31, 32, 33, 34 may comprise several walls having different heights, measured from the inner surface 27, or may comprise a continuous wall having a height, measured from the inner surface 27, that varies along an extension direction of the continuous wall. The at least one wall 31, 32, 33, 34 may be configured to support the noise dampening mesh material 40 on free end rims of the at least one wall 31, 32, 33, 34. The at least one wall 31, 32, 33, 34 may be configured such that each of the at least one wall 31, 32, 33, 34 is flush does not project beyond (e.g., is flush with) the plane (e.g., the second plane 12) in which the second passage ends 24.2 of the several gas outlet passages 23 are located. The at least one wall 31, 32, 33, 34 of the retarding structure may be contained entirely within the concavity 29, without projecting beyond the second plane 12 towards the first plane 11. The at least one wall 31, 32, 33, 34 may comprise wall(s) having spatially varying heights, measured from the inner surface 27, to form a substantially planar abutment surface for the noise dampening mesh material 40.

The at least one wall 31, 32, 33, 34 arranged in the concavity 29 provides baffles that cause a fraction of a gas flow entering the concavity 29 to be deflected. Thereby, the at least one wall 31, 32, 33, 34 is configured to define a tortuous and/or labyrinth-type flow channel that prevents gas from flowing along a straight-line path from a center region of the concavity 29 towards the several gas outlet passages 23. The at least one wall 31, 32, 33, 34 may have any one or any combination of various configurations to attain this effect. The at least one wall may comprise several sequences 45, 48 of walls each having, in a viewing direction parallel to the center axis 13, a triangular shape. The several sequences of walls 45, 48 may have vertices 46.3 at a connection of legs (sides 46.1, 46.2) of the triangular shape, and straight lines along which the vertices are arranged for different ones of the several sequences 45, 48 may be angled relative to each other. Alternatively or additionally, the retarding structure may comprise a wall 49 having a spiral shape when viewed in a viewing direction parallel to the center axis 13.

The gas directing structure 30 may support a mesh material end surface 41 of the noise dampening mesh material 40 thereon. The silencer 50 may be configured such that the gas flow passages defined by the at least one wall 31, 32, 33, 34 in the concavity 30 are free of noise dampening mesh material 40.

The silencer 50 having such a configuration has features that synergistically cooperate to affect the pressure drop and reduce the maximum noise level generated at the onset of an exhaust operation. The concavity 29 allows a fraction of a gas flow entering the silencer 50 to expand therein, with the retarding structure 30 forming baffles that prevent gas entering the concavity 29 in a radially central portion to directly exit through the gas outlet passages 23 along straight-line flow paths. Thereby, improved noise attenuation is attained.

To provide sufficient space for the retarding structure and contribute to efficient noise reduction, the silencer 50 may be configured such that a depth 17 of the concavity divided by a spacing 16 between the second plane 12 (e.g., the plane in which the second ends 24.2 of the gas outlet passages 23 are located) and the first plane 11 is at least 0.1, at least 0.15, or at least 0.2. The depth 17 of the concavity 29 is measured parallel to the center axis 13 between the second plane 12 (e.g., the plane in which the second passage ends 24.2 are located) and a point on the inner surface 27 of the end wall 26 that has a spacing (measured parallel to the center axis 13) from the second plane 12 that is maximum among all points on the inner surface of the end wall.

The silencer 50 comprises the mating housing component 51. The silencer housing component 10 comprises the mounting structure 25 configured to secure the silencer housing component 10 to the mating housing component 51. The mating housing component 51 comprises a mating engagement structure 55 configured for engagement with the mounting structure 25. The engagement structure 25 may be configured to engage the mating engagement structure 55, e.g., in a destruction-free reversibly releasable manner. The mating engagement structure 55 may comprise a plurality of mating engagement features, such as apertures, configured for reversibly releasable engagement with the engagement members 25a, 25b, 25c of the silencer housing component 10. The mating engagement features may be provided on a rim 54 of the mating housing component 51. The rim 54 may extend circumferentially around and along at least a portion of the outer wall 20 and may overlap the portion of the outer wall 20.

The silencer 50 comprises a gas inlet 52. The gas inlet 52 may be provided at the mating housing component 51. The mating housing component 51 may comprise an attachment flange 53 configured for securing the silencer 50. The attachment flange 53 may be configured to secure the silencer 50 to an exhaust port or an exhaust line. The attachment flange 53 may comprise several flange portions, each separated from adjacent flange portions of the attachment flange by a gap when the attachment flange 53 is in an unbiased position in which a compression band does not exert a radial force onto the attachment flange 53. The silencer 50 may comprise a fastening band, such as a metal band 54, and a tightening screw for tightening and securing the fastening band, for mounting the silencer 50.

Fig. 2, Fig. 4, and Fig. 5 are perspective views of an implementation of the silencer housing component 10 comprising the retarding structure 30. The retarding structure 30 may comprise several walls having triangular shapes when viewed in a viewing direction parallel to the center axis 13. While triangular walls are illustrated in Fig. 2, Fig. 4, and Fig. 5, the silencer housing component 10 may have a configuration in which the walls have a shape other than triangular when viewed in a plan view parallel to the center axis 13. The several walls may comprise the sequence of triangular walls 45. The sequence of triangular walls 45 comprises a triangular wall 46 having, in plan view with a viewing direction parallel to the center axis 13, a side 46.1 of the triangular shape, a further side 46.2 of the triangular shape, and a vertex portion 46.3 along which the side 46.1 and the further side 46.2 interconnect. Each of the triangular walls in the sequence 45 may have a similar shape, with an angle between the sides 46.1, 46.2 being the same for each of the triangles in the sequence 45. The triangular walls, such as a triangular wall 46 and an adjacent further triangular wall 47 in the same sequence 45 may be arranged in a nested manner, with the vertex portion of the further triangular wall 47 extending between the sides 46.1, 46.2 of the triangular wall 46. A further sequence 48 of triangular walls may be angularly offset relative to the sequence 47. Straight lines connecting the vertex portions 46.3 for various different sequences 45, 48 of triangular walls may be angled relative to each other and may respectively pass through the center axis 13. As mentioned above, while triangular walls are illustrated in Fig. 2, Fig. 4, and Fig. 5, each of the walls in the sequences may have a shape other than triangular when seen in plan view.

The sequences 45, 48 of triangular walls may extend in a coplanar manner to provide a flat abutment surface for supporting the noise dampening mesh material 40. Free end rims of the triangular walls of each of the sequences 45, 48 may extend in a same plane, which may be coplanar with the plane in which the second ends 24.2 of the gas outlet passages 23 extend or which may be further away from the first plane 11 than the plane in which the second ends 24.2 of the gas outlet passages 23 extend.

To provide baffles effective to force gas to flow through the concavity 29 along tortuous and/or labyrinth-like gas flow paths, the at least one wall of the gas directing structure 30 may have a spatially varying wall height measured from the inner surface 27. This is illustrated in the partial cross-sectional view of Fig. 3, which schematically depicts the end wall 26 and one or several walls 31, 32 extending therefrom. While reference will be made to several walls 31, 32 (such as different triangular walls in the sequences 45, 48), the explanations are also applicable to different portions of a single wall (such as a spiral-shaped wall). The walls 31, 32 respectively extend from a wall base end 35, 36 to a free end rim 37, 38. The free end rims 37, 38 may be coplanar. To this end, the gas directing structure 30 may be configured such that the wall 31 may have a wall height 31.1, measured from the wall base end 35 to the free end rim 37, and the further wall 32 may have a further wall height 32.1 measured from the further wall base end 36 to the further free end rim 38, the further wall height 32.1 being different from the wall height 31.1 and the further free end rim 38 being coplanar with the free end rim 36.

To provide baffles effective to force gas to flow through the concavity 29 along tortuous and/or labyrinth-like gas flow paths, the at least one wall of the gas directing structure 30 may define gas flow channels that, in plan view with a viewing direction along the center axis 13, have angled and/or curved portions. For illustration, as illustrated in Fig. 4, the gas directing structure 40 comprises several walls defining a gas flow channel 42 from a radially central region of the concavity to the gas outlet passages 23, with the gas flow channel 42 comprising at least one angled portion 43. Thereby, gas flows 44.1, 44.2 from the central portion to the gas outlet passages 23 are caused to follow tortuous, labyrinth-like, or curved paths.

Various implementations of the gas directing structure 30 can be used in the silencer 50, as further illustrated with reference to Fig. 5, Fig. 6, and Fig. 7.

Fig. 5 shows a plan view of an implementation of the silencer housing component 10 in which the gas directing structure 30 comprises a plurality of sequences 45, 45.2, 45.3, 45.4, 45.5 of triangular walls, which are angularly offset from each other, and a plurality of further sequences 48, 48.2, 48.3, 48.4, 48.5 of walls (e.g., of triangular walls, without being limited thereto), which are angularly offset from each other and from the sequences 45, 45.2, 45.3, 45.4, 45.5 of walls. The gas directing structure 30 may comprise at least three, at least four, or at least five sequences 45, 45.2, 45.3, 45.4, 45.5 of walls and at least three, at least four, or at least five further sequences 48, 48.2, 48.3, 48.4, 48.5 of walls which may be triangular walls, without being limited thereto. The sequences may comprise other numbers of walls, which may be triangularly shaped or which may have a shape other than a triangular shape when seen in plan view. Each of the sequences 45, 45.2, 45.3, 45.4, 45.5 may have a same number, optionally also a same geometry, of the walls (which may be triangular walls, without being limited thereto). Each of the further sequences 48, 48.2, 48.3, 48.4, 48.5 may have a same number, optionally also a same geometry, of the walls (which may be triangular walls, without being limited thereto). A number of triangular walls in each of the further sequences 48, 48.2, 48.3, 48.4, 48.5 may be different from a number of walls in each of the sequences 45, 45.2, 45.3, 45.4, 45.5. The gas directing structure 30 may be configured such that, in plan view parallel to the center axis 13, one of the sequences 45, 45.2, 45.3, 45.4, 45.5 and one of the further sequences 48, 48.2, 48.3, 48.4, 48.5 of triangular walls alternate as a function of angle around the center axis 13.

Fig. 6 shows a plan view of a further implementation of the silencer housing component 10 in which the gas directing structure 30 comprises a plurality of sequences 45, 45.2, 45.3, 45.4, of walls (e.g., of triangular walls, without being limited thereto), which are angularly offset from each other, and a plurality of further sequences 48, 48.2, 48.3, 48.4 of walls (e.g., of triangular walls, without being limited thereto), which are angularly offset from each other and from the sequences 45, 45.2, 45.3, 45.4, of walls, which may be triangular walls, without being limited thereto. The sequences may comprise other numbers of walls, which may be triangularly shaped or which may have a shape other than a triangular shape when seen in plan view. The gas directing structure 30 may comprise at least three or at least four sequences 45, 45.2, 45.3, 45.4 of walls (which may be triangular walls, without being limited thereto) and at least three or at least four further sequences 48, 48.2, 48.3, 48.4 of walls (which may be triangular walls, without being limited thereto). Each of the sequences 45, 45.2, 45.3, 45.4, may have a same number, optionally also a same geometry, of the walls. Each of the further sequences 48, 48.2, 48.3, 48.4 may have a same number, optionally also a same geometry, of the walls. A number of walls in each of the further sequences 48, 48.2, 48.3, 48.4 may be different from a number of walls in each of the sequences 45, 45.2, 45.3, 45.4. The gas directing structure 30 may be configured such that, in plan view parallel to the center axis 13, one of the sequences 45, 45.2, 45.3, 45.4 and one of the further sequences 48, 48.2, 48.3, 48.4 of walls alternate as a function of angle around the center axis 13.

As illustrated by Fig. 5 and Fig. 6, different numbers and arrangements of walls may be realized in the silencer 30. The shape of the walls is not limited to a triangular wall shape, when seen in plan view parallel to the center axis 13.

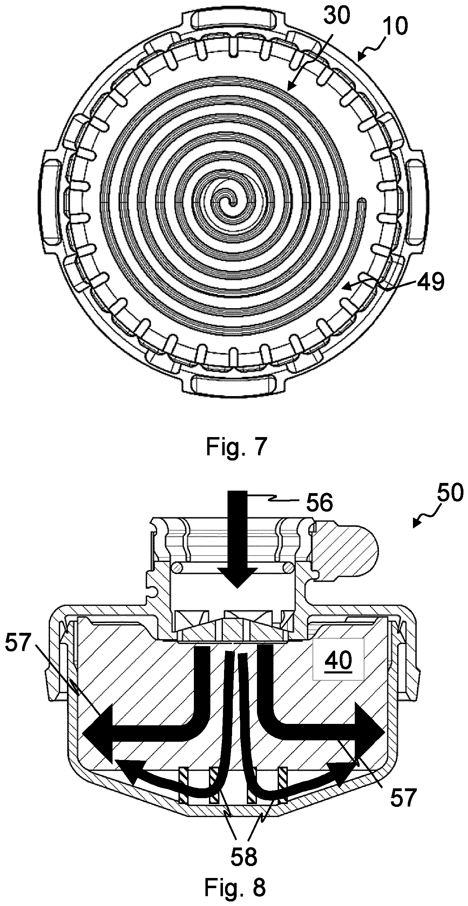

Fig. 7 shows a plan view of a further implementation of the silencer housing component 10 in which the gas directing structure 30 is formed by a single wall 49 having, in a plan view with a viewing direction along the center axis 13, a spiral shape. The height of the wall 49 varies continually to ensure that the upper end rim will remain in one single plane to provide support for the noise dampening mesh material 40.

While exemplary implementations of the gas directing structure 30 are discussed in detail in association with Fig. 2 to Fig. 7, various alternative or other structures may be used to retard the egress of gas by forcing gas to flow along gas flow paths through the concavity 29 that are not directed radially along straight lines.

Fig. 8 shows a cross-sectional view of the silencer 50 to further illustrate operation of the silencer. During an exhaust operation, the silencer 50 receives a gas inflow 56. A first fraction 57 of the gas flow can flow to the gas outlet passages 23 through the noise dampening mesh material, without having to pass through the concavity 29. A second fraction 58 of the gas flow flows through the concavity 29, with an egress of the second fraction 58 through the gas outlet passages 23 being retarded by the retarding structure 30. Thereby, the silencer 50 modifies the pressure drop in at least an initial phase of the exhaust operation, as compared to a configuration in which the concavity 29 is not provided, and reduces the maximum noise level in the initial phase.

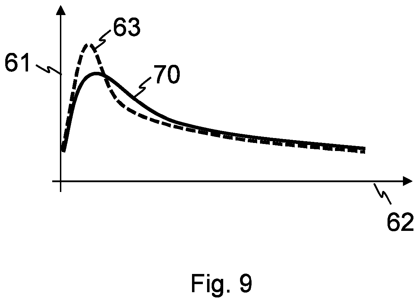

Fig. 9 is a graph representing how the construction of the silencer 50 modifies the gas flow characteristics. Fig. 9 shows pressure as a function of time along a time axis 62 and a pressure axis 61. Fig. 9 shows a comparative pressure curve 63 that represents the variation in pressure (e.g., hydrostatic pressure at the gas outflow passages 23) for a conventional silencer that does not have the retarding structure 30 disposed in the concavity 29 and that does not have the concavity 29. Fig. 9 shows the pressure curve 70 for the silencer 50 according to an embodiment of the invention, which comprises the concavity 29 and the retarding structure 30, but has otherwise the same dimensions and configuration of the silencer housing component 10 in which the noise dampening mesh material 40 is retained. In the silencer 50 according to the embodiment, the pressure drop is modified as compared to the legacy silencer, causing the maximum noise level in the initial phase of the exhaust operation to be reduced.

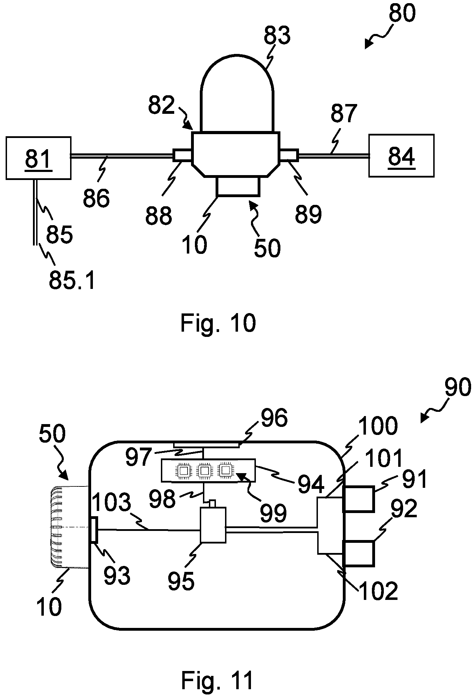

Fig. 10 is a schematic representation of a pneumatic system 80 comprising an air dryer 82, 83. The air dryer 82, 83 comprises an air dryer body 82 and an air dryer cartridge 83. The air dryer body 82 comprises a supply line connector 88, a consumer line connector 89, and an air dryer exhaust port. The silencer housing component 10 is provided at the air dryer exhaust port to implement the silencer 50. The air dryer 82, 83 is configured to communicate the supply line connector 88 with a gas inlet of the air dryer cartridge 83. The air dryer 82, 83 is configured to communicate via another internal conduit of the air dryer body 82 a gas outlet of the air dryer cartridge 83 with the consumer line connector 88. The air dryer 82, 83 is configured to exhaust gas through the exhaust port and the silencer housing component 10 provided at the exhaust port, e.g., during regeneration.

The pneumatic system 80 comprises a compressor 81. The compressor 81 is configured to compress ambient air sucked in via an intake opening 85.1 that may be provided on an intake conduit 85. The intake conduit 85 may be directly connected to the compressor 81. The pneumatic system 80 comprises a supply line 86 directly or indirectly connected to the compressor 81 and the supply line connector 88. The pneumatic system 80 comprises a consumer line 87 directly connected to the consumer line connector 89 and a pneumatic consumer system 84 that comprises one or several pneumatic consumers. The one or several pneumatic consumers may comprise any one or any combination of: an air supply system; a pneumatic levelling system; an electropneumatic levelling system; a pneumatic braking system; an electropneumatic braking system; a parking brake system; a sensor cleaning system; a pneumatic or electropneumatic door actuation system; without being limited thereto.

Fig. 11 shows a pneumatic system component 90. The pneumatic system component 90 is configured for use in a pneumatic system of a vehicle. The pneumatic system component 90 comprises a component housing 100, at least one valve 95 arranged in the housing 100, and a plurality of ports provided on the housing 100 in direct or indirect fluid communication with a valve 95 of the pneumatic system component 90. The plurality of ports comprise at least an exhaust port 93. The silencer housing component 10 is configured for attachment (e.g., an attachment that can be released in a reversible, destruction-free manner) with the component housing 100 at the exhaust port 93, to implement the silencer 50. The plurality of ports may comprise a supply port 91 configured to receive pressure gas provided by a gas supply system and/or a discharge port 92 configured for fluid communication (e.g., for bi-directional fluid communication) with at least one pneumatic consumer. The pneumatic system component 90 may comprise a first fluid connection 101 that establishes (direct or indirect) fluid communication of the supply port 91 and a first port of the valve 95. The first fluid connection 101 may be directly connected to the supply port 91 and the first port of the valve 95. The pneumatic system component 90 may comprise a second fluid connection 102 that establishes (direct or indirect) fluid communication of the discharge port 92 and a second port of the valve 95. The second fluid connection 102 may be directly connected to the discharge port 92 and the first port of the valve 95. The pneumatic system component 90 may comprise a third fluid connection 103 that establishes (direct or indirect) fluid communication of the exhaust port 93 and a third port of the valve 95. The third fluid connection 103 may be directly connected to the exhaust port 93 and the third port of the valve 95. The first fluid connection 101, the second fluid connection 102, and the third fluid connection 103 may be integrated within the component housing 100.

The pneumatic system component 90 may be configured as a component for an electropneumatic system. The pneumatic component 90 may be an APU or a component of an APU. The at least one valve 95 may comprise a solenoid valve or several solenoid valves. The pneumatic system component 90 may comprise an electric interface 96. The electric interface 96 may be configured for being connected to a control unit, a data bus, or at least one actuation element that can be operated by a vehicle operator. The pneumatic system component 90 may comprise an electronics portion 94 that may be accommodated within the component housing 100 or a dedicated electronics housing attached to the component housing 100. The electronics portion 94 may be configured to selectively energize at least one solenoid valve, responsive to a signal or control data received at the electric interface 96. The electronics portion 94 may comprise one or several circuit(s) 99. The one or several circuit(s) may comprise any one, several, or any combination of: integrated circuits, integrated semiconductor circuits, processors, controllers, application specific integrated circuits (ASICs), field programmable gate arrays (FPGAs), without being limited thereto. The electronics portion 94 may be communicatively coupled with the electric interface 96 via at least one electric connection 97. The electronics portion 94 may be coupled with the solenoid valve(s) 95 via at least one further electric connection 98.

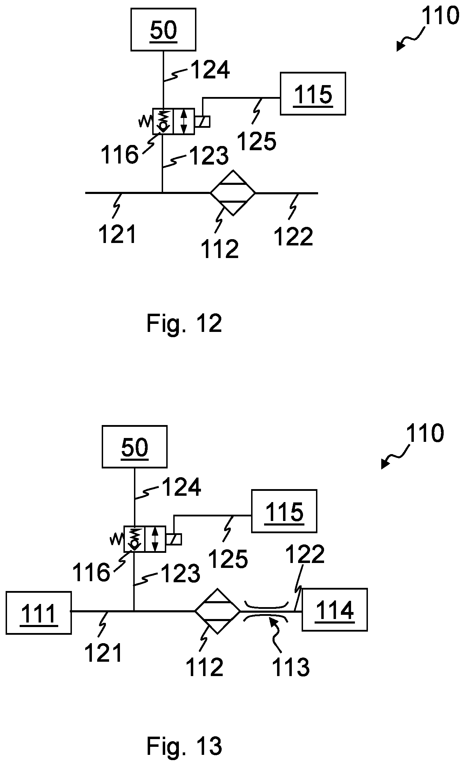

Fig. 12 shows a schematic representation of a pneumatic system 110 for a vehicle. The pneumatic system 110 is configured as a gas supply system. The pneumatic system 110 comprises an air dryer 112. The pneumatic system 110 comprises a supply line 121 directly connected to the air dryer 112 to provide compressed gas to the air dryer 112 and/or transport gas towards at least one exhaust line 123, 124 in an air dryer regeneration operation and/or other exhaust operation. The pneumatic system 110 comprises a pneumatic consumer line 122 directly connected to the air dryer 112 and configured to provide compressed gas to a pneumatic consumer system comprising at least one pneumatic consumer. The pneumatic consumer line 122 may be configured to provide gas from the pneumatic consumer system to the air dryer 112, e.g., to perform a regeneration operation. The pneumatic system 110 comprises the at least one exhaust line 123, 124 configured to exhaust gas, via the silencer 50 according to an embodiment, to ambient atmosphere. The at least one exhaust line 123, 124 comprises an exhaust line 123 that is directly connected to the supply line 121 and to a control valve 116. The at least one exhaust line 123, 124 comprises a further exhaust line 124 directly connected to the control valve 116 and the gas inlet 52 of the silencer 50. The gas supply system 110 comprises control electronics 115, such as a control device, coupled to the control valve 116 by an electric connection 125. The control electronics 115 is configured to control the control valve 116 to selectively establish fluid communication between the supply line 121 and the silencer 50 and/or to selectively disconnect the silencer 50 from the supply line 121.

Fig. 13 shows a schematic representation of a pneumatic system 110 for a vehicle. The pneumatic system 110 is configured as a gas supply system. Components already discussed in association with Fig. 12 are designated with the same reference signs as in Fig. 12. The pneumatic system 110 further comprises a pressure gas source 111. The pressure gas source 111 may comprise a compressor and/or a pressure reservoir. The pressure gas source 111 may comprise an intake for ambient air and may be configured to compress the ambient air to provide pressure gas. The pressure gas source 111 may be connected directly or via at least one valve to the supply line 121. The pneumatic system 110 further comprises a pneumatic consumer system 114. The pneumatic consumer system 114 comprises at least one pneumatic consumer coupled, directly or via at least one fluid circuit component, to the pneumatic consumer line 122. The pneumatic consumer line 122 comprises at least one regeneration valve 113 configured to be activated to selectively perform a regeneration of a desiccant of the air dryer 112. When performing the regeneration, the gas passing from the pneumatic consumer system 114 through the gas dryer 112 may be exhausted via the silencer 50 connected to the at least one exhaust line 123, 124.

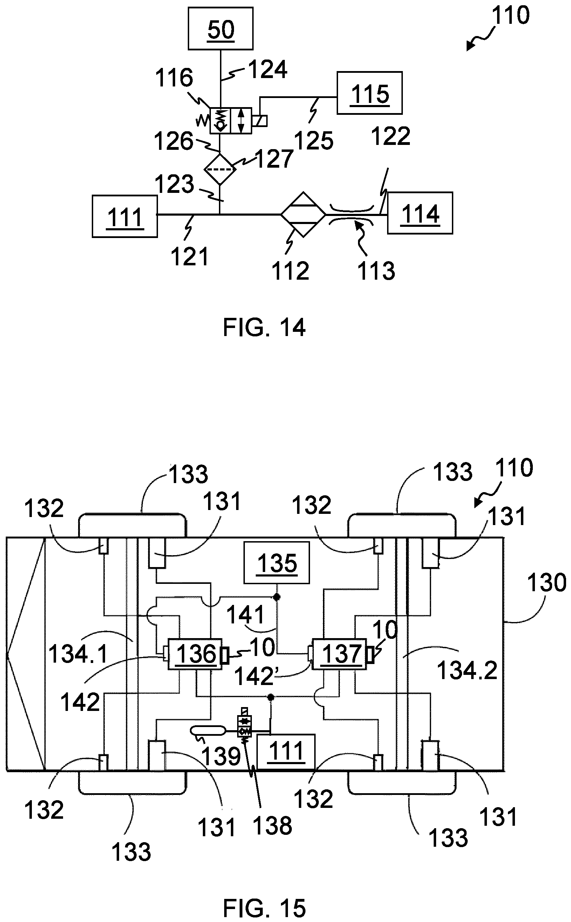

Fig. 14 shows a schematic representation of a pneumatic system 110 for a vehicle. The pneumatic system 110 is configured as a gas supply system. Components already discussed in association with Fig. 12 and/or Fig. 13 are designated with the same reference signs as in Fig. 12 and/or Fig. 13. The pneumatic system 110 further comprises at least one filter 127. The exhaust line 123 is directly connected to a port of the filter 127. The pneumatic system 110 further comprises a filter connection line 126 directly connected to another port of the filter 127 and the control valve 116.

Fig. 15 shows a schematic representation of a vehicle 130 (e.g., a utility vehicle 130) comprising a pneumatic system 110. The pneumatic system 110 may be configured as a braking system, e.g., as an electronic braking system (EBS). The pneumatic system 110 configured as a braking system comprises at least one pneumatic system component, such as a front axle modulator 136 and/or a rear axle modulator 137, which comprises the silencer housing component 10. The vehicle 130 comprises a front axle 134.1 and a rear axle 134.2 or several rear axles. The vehicle 130 comprises several wheel 133. The vehicle 130 comprises one or several sensors, such as wheel speed sensors 132 associated with the several wheels 133. The pneumatic system 110 comprises several brake cylinders 131. The pneumatic system 110 comprises control electronics 135, such as a control unit 135, which is coupled to the front axle modulator 136 and the rear axle modulator 137 via at least one electric connection 141. The front axle modulator 136 comprises an electric interface 142 for communicatively interfacing with the control electronics 135. The rear axle modulator 137 comprises a further electric interface 142' for communicatively interfacing with the control electronics 135. The front axle modulator 136 has at least one discharge port in fluid communication with brake cylinders 131 for front axle wheels. The rear axle modulator 137 has at least one further discharge port in fluid communication with brake cylinders 131 for rear axle wheels. The front axle modulator 136 and/or the rear axle modulator 137 may respectively comprise the silencer housing component 10 to implement the silencer 50. The pneumatic system 110 may comprise the fluid supply system of any one of Fig. 12, Fig. 13, and Fig. 14 to provide pressure gas to the modulators 136, 137. The pneumatic system 110 may comprise a supply system that comprises at least the compressor 111 and a pressure reservoir 138, with the pressure reservoir being connected to a supply line for the modulators and an outlet port of the compressor 111 via a control valve 138.

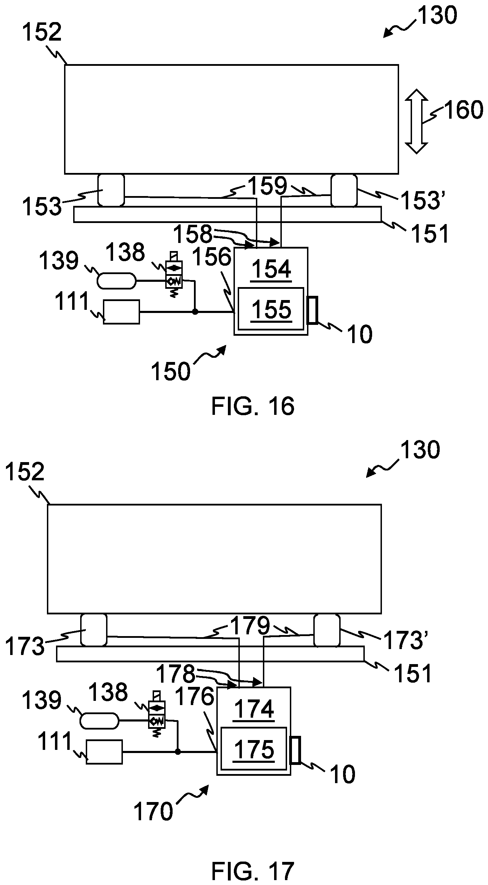

Fig. 16 is a schematic representation of a vehicle 130 which comprises a pneumatic system 150 configured as an electro-pneumatic cabin leveling system. The electro-pneumatic cabin leveling system 150 is configured to change an inclination of a cabin 152 of the vehicle 130 relative to a chassis 151. The pneumatic system 150 comprises at least a pneumatic adjustment element 153 and a further pneumatic adjustment element 153', each of which is configured to change the inclination of the cabin 152. The pneumatic adjustment element 153 and the further pneumatic adjustment element 153' can be configured as inflatable gas bags. The pneumatic system 150 comprises an electropneumatic control device 154. The electropneumatic control device 154 comprises at least two solenoid valves 155 (with the system of at least two solenoid valves being indicated merely schematically in Fig. 16). The electropneumatic control device 154 is arranged to selectively energize the at least two solenoid valves 155 such that compressed air received at a compressed gas inlet 156 is supplied to one or both of the pneumatic adjusting element 153 and the further pneumatic adjusting element 153'. The electropneumatic control device 154 is arranged to selectively energize the at least two solenoid valves 155 such that one or both of the pneumatic adjusting element 153 and the further pneumatic adjusting element 153' is vented via exhaust port of the electropneumatic control device 154. The silencer housing component 10 is arranged at the exhaust port of the electropneumatic control device 154 to implement the silencer 50. The electropneumatic control device 154 comprises consumer ports 158, each of which is connected to one of the pneumatic adjusting elements 153, 153' via a connecting line 159. The configuration of the pneumatic system 150 allows different parts of the cabin 152 to be adjusted along an adjustment path 160 in order to adjust the inclination and/or height so that the cabin 152 has a desired attitude relative to a gravity direction. For illustration, the pneumatic system 150 may be configured to allow the cabin 152 to be oriented with its floor perpendicular to a direction of gravity when the chassis 151 is inclined. The solenoid valves 155 can be actuated in a conventional manner, responsive to a mechanical linkage, signals or data received by the electropneumatic control device 154. The pneumatic system 150 may comprise a gas supply system as explained with reference to Fig. 12, Fig. 13, and Fig. 14. The pneumatic system 150 comprises at least a compressor 111 and a gas reservoir 139, with the gas reservoir 139 being connected to the electropneumatic control device 154 via at least one control valve 138.

Fig. 17 is a schematic representation of a vehicle 130 having a pneumatic system 170 configured as an electro-pneumatic shock absorber system. The pneumatic system 170 comprises at least a pneumatic shock absorber 173 and a further pneumatic shock absorber 173', which are each arranged between a chassis 151 and a cab 152. The pneumatic shock absorber 173 and the further pneumatic shock absorber 173' can be configured as gas bags whose pressure is adjustable. The pneumatic system 170 comprises an electropneumatic control device 174. The electropneumatic control device 174 comprises at least one solenoid valve or several solenoid valves 175 (which are shown merely schematically as a block in Fig. 17). The electropneumatic control device 174 is configured to selectively energize the at least one solenoid valve or the several solenoid valves 175 such that compressed gas received at a gas supply port is discharged to the pneumatic shock absorber 173 and the further pneumatic shock absorber 173' and/or that the pneumatic shock absorber 173 and the further pneumatic shock absorber 173' can be vented via an exhaust port of the electropneumatic control device 174. The silencer housing component 10 is arranged at the exhaust port to implement the silencer 50. The electropneumatic control device 174 comprises at least one consumer port 178, which is connected to the pneumatic shock absorber 173 and the further pneumatic shock absorber 173' via at least one connecting line 179. This configuration allows the pressure in the shock absorbers 173, 173' to be controlled using open-loop control and/or closed-loop control. The pneumatic system 170 may comprise a gas supply system as explained with reference to Fig. 12, Fig. 13, and Fig. 14. The pneumatic system 170 comprises at least a compressor 111 and a gas reservoir 139, with the gas reservoir 139 being connected to the electropneumatic control device 154 via at least one control valve 138. The solenoid valves 175 can be actuated in a conventional manner, responsive to a mechanical linkage, signals or data received by the electropneumatic control device 174.

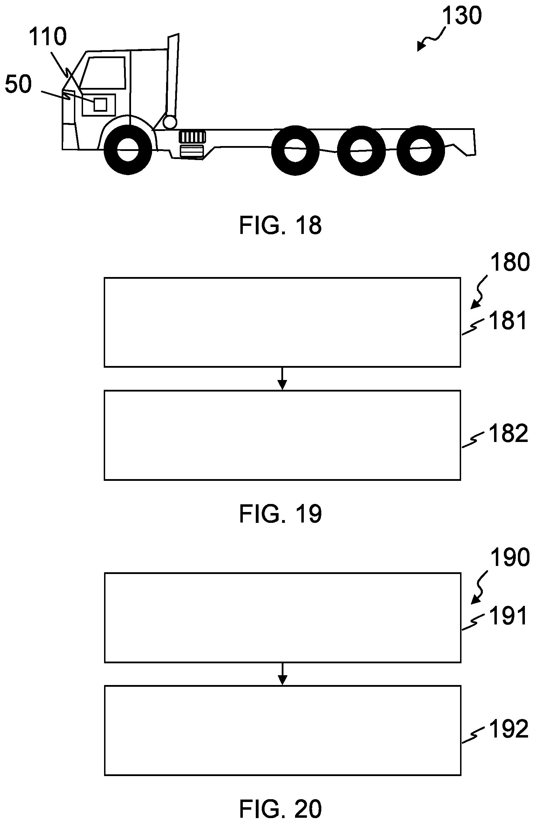

Fig. 18 shows a schematic representation of a vehicle configured as a commercial vehicle 130. The commercial vehicle 130 comprises at least one pneumatic system 110 comprising the silencer 50 according to an embodiment. The pneumatic system 110 may comprise any one or any combination of a supply system for supplying compressed air; a levelling system; a suspension system; a braking system; a door actuation system.

Fig. 19 is a flow chart of a method 180 of exhausting gas from a pneumatic system 80, 110, 150, 170 for a vehicle 130. The method 180 may be performed automatically by or using the pneumatic system 110, 130, 150, 170 comprising at least one silencer 50 according to an embodiment.

The method 180 comprises a process block 181 of establishing, via at least one valve, fluid communication between at least one component of the pneumatic system and an exhaust port. The exhaust port is a port at which the silencer 50 is directly or indirectly mounted.

The method 180 further comprises a process block 182 of exhausting, via the silencer 50, the gas flow through the several gas outlet passages 23. Exhausting the gas flow may comprise retarding, by the retarding structure 30 in the concavity 29, egress of at least a fraction 58 of the gas flow through the gas outlet passages 23.

Fig. 20 is a flow chart of a use method 190 of using the, the silencer 50, the pneumatic component, the pneumatic system, the commercial vehicle or the exhaust method according to an embodiment.

The use method 190 comprises a process block 191 of operating a pneumatic system of a commercial vehicle, with the commercial vehicle comprising the silencer 50 according to an embodiment.

The use method comprises a process block 192 of performing an exhaust operation, in which the silencer 50 causes a pressure drop during at least an initial phase of the exhaust operation to be modified by the retarding structure 30 in the concavity 29 to reduce a maximum noise level during the exhaust operation.

While embodiments have been described with reference to the drawings, modifications and alterations may be implemented in other embodiments.

For illustration, while embodiments have been described in which the retarding structure comprises walls having a triangular shape or a spiral shape when viewed in plan view, other wall configurations may be used that provide a tortuous, labyrinth-type, angled, or curved gas flow path through the concavity 29.

For further illustration, the invention may be applied to a variety of pneumatic systems, including gas supply systems configured to perform an air dryer regeneration, without being limited thereto.

Various effects and advantages are attained by embodiments of the invention. Embodiments provide improved noise reduction characteristics. This facilitates compliance with regulatory noise pollution requirements, enhances vehicle operator safety and/or comfort, and improves passenger comfort.

### List of Reference Numerals (part of the description)

- 10: silencer housing component
- 11: first plane
- 12: second plane
- 13: center axis
- 14: point
- 15: receptacle
- 16: circumferential wall height
- 17: concavity depth
- 20: outer wall
- 21: first axial end
- 22: second axial end
- 23: several gas outlet passages
- 24: gas outlet passage
- 24.1: first passage end
- 24.2: second passage end
- 25: mounting structure
- 25a, 25b, 25c: engagement member
- 26: end wall
- 27: inner surface
- 28: concavity forming portion
- 29: concavity
- 30: retarding structure
- 31: wall
- 31.1: wall height
- 32: second wall
- 32.1: further wall height
- 33: third wall
- 34: fourth wall
- 35: wall base end
- 36: further wall base end
- 37: free end rim
- 38: further free end rim
- 40: noise dampening mesh material
- 41: mesh material end surface
- 42: gas flow channel
- 43: angled portion
- 44.1: gas flow
- 44.2: gas flow
- 45: sequence of triangular walls
- 45.2: second sequence of triangular walls
- 45.3: third sequence of triangular walls
- 45.4: fourth sequence of triangular walls
- 45.5: fifth sequence of triangular walls
- 46: triangular wall
- 46.1: side of triangular wall
- 46.2: further side of triangular wall
- 46.3: vertex portion
- 47: further triangular wall
- 48: further sequence of triangular walls
- 48.2: second further sequence of triangular walls
- 48.3: third further sequence of triangular walls
- 48.4: fourth further sequence of triangular walls
- 48.5: fifth further sequence of triangular walls
- 49: spiral wall
- 50: silencer
- 51: mating housing component
- 52: gas inlet
- 53: attachment flange
- 54: rim
- 55: mating engagement structure
- 56: gas inflow
- 57: first fraction of gas flow
- 58: second fraction of gas flow
- 61: pressure axis
- 62: time axis
- 63: comparative pressure curve
- 70: pressure curve
- 80: pneumatic system
- 81: compressor
- 82: air dryer body
- 83: air dryer cartridge
- 84: pneumatic consumer system
- 85: intake conduit
- 85.1: intake opening
- 86: supply line
- 87: consumer line
- 88: supply line connector
- 89: consumer line connector
- 90: pneumatic system component
- 91: supply port
- 92: discharge port
- 93: exhaust port
- 94: electronics portion
- 95: solenoid valve
- 96: electric interface
- 97: electric connection
- 98: further electric connection
- 99: circuit(s)
- 101: first fluid connection
- 102: second fluid connection
- 103: third fluid connection
- 110: pneumatic system for a vehicle
- 111: pressure gas source
- 112: air dryer
- 113: regeneration valve
- 114: pneumatic consumer system
- 115: control electronics
- 116: control valve
- 121: supply line
- 122: pneumatic consumer line
- 123: exhaust line
- 124: further exhaust line
- 125: electric connection
- 126: filter connection line
- 127: filter
- 130: vehicle
- 131: brake cylinder
- 132: wheel speed sensor
- 133: wheel
- 134.1: front axle
- 134.2: rear axle
- 135: control electronics
- 136: front axle modulator
- 137: rear axle modulator
- 138: control valve
- 139: pressure reservoir
- 141: electric line
- 142: electric interface
- 150: electropneumatic levelling system
- 151: chassis
- 152: cabin
- 153: adjustment member
- 153': further adjustment member
- 154: electropneumatic control device
- 155: solenoid valve(s)
- 156: supply port
- 158: discharge port(s)
- 159: pneumatic consumer lines
- 160: levelling adjustment path
- 170: electropneumatic shock absorbing system
- 173: pneumatic shock absorber
- 173': further pneumatic shock absorber
- 174: electropneumatic control device
- 175: solenoid valve(s)
- 176: supply port
- 178: discharge port(s)
- 179: pneumatic consumer lines
- 180: method
- 181, 182: process blocks
- 190: method
- 191, 192: process blocks

## Claims

1. A silencer for a pneumatic component (80; 90) or a pneumatic system (110; 120; 150; 170) for a vehicle (130), the silencer (50) comprising:
a noise dampening mesh material (40);
a silencer housing component (10) defining a receptacle (15) for the noise dampening mesh material (40), the silencer housing component (10) comprising:
an outer wall (20) extending circumferentially around a center axis (13) of the silencer housing component (10), the outer wall (20) comprising a first axial end (21) and a second axial end (22), wherein a mounting structure (25) for mounting the silencer housing component (10) is arranged at the first axial end (21) of the outer wall (20), wherein several gas outlet passages (23) are formed through the silencer housing component (10) in at least the outer wall (20);
an end wall (26) extending from the second axial end (22) of the outer wall (20) towards the center axis (13); and
a retarding structure (30) configured to reduce a rate of gas outflow through the several gas outlet passages (23) during at least part of an exhaust operation, the retarding structure (30) comprising at least one wall (31-34; 46, 47; 49) arranged in a concavity (29), wherein the concavity (29) is formed by the end wall (26), and wherein the retarding structure (30) projects from the end wall (26) towards the first axial end (21).

2. The silencer (50) of claim 1, wherein the first axial end (21) extends along a first plane (11) perpendicular to the center axis (13), wherein each of the several gas outlet passages (23) has a first passage end (24.1) and a second passage end (24.2), the second passage end (24.2) being spaced from the first plane (11) by a greater distance than the first passage end (24.1), wherein the second passage end (24.2) is located on a second plane (12) perpendicular to the center axis (13), and wherein the end wall (26) comprises a concavity forming portion (28) that forms the concavity (29) and that extends at a greater distance from the first plane (11) than the second plane (12).

3. The silencer (50) of claim 2, wherein a depth (17) of the concavity (29) divided by a spacing (16) between the second plane (12) and the first plane (11) is at least 0.1, at least 0.15, or at least 0.2, wherein the depth is measured parallel to the center axis (13) between the second plane (12) and a point on an inner surface (27) of the end wall (26) that has a spacing from the second plane (12) that is maximum among all points on the inner surface (27) of the end wall (26).

4. The silencer (50) of claim 2 or claim 3, wherein the at least one wall (31-34; 46, 47; 49) is dimensioned such that it does not project beyond the second plane (12) towards the first plane (11), and/or that it does not intersect the second plane (12).

5. The silencer (50) of any one of the preceding claims, wherein each of the at least one wall (31-34; 46, 47; 49) comprises a wall base (35, 36) at the end wall (26) and a free end rim (37, 38), wherein the free end rim (37, 38) abuts on the noise dampening mesh material (40).

6. The silencer (50) of claim 5, wherein the wall base (35, 36) is spaced from the noise dampening mesh material (40).

7. The silencer (50) of claim 5 or claim 6, wherein the at least one wall (31-34; 46, 47; 49) forms gas flow channels (42) comprising angled portions (43) and/or curved portions (43).

8. The silencer (50) of claim 7, wherein part or all of the gas flow channels (42) is free from the noise dampening mesh material (40).

9. The silencer (50) of any one of the preceding claims, wherein the at least one wall (31-34; 46, 47; 49) mechanically supports and retains the noise dampening material (40).

10. The silencer (50) of any one of the preceding claims, wherein
the outer wall (20), the end wall (26), and the at least one wall (31-34; 46, 47; 49) are formed as a unitary molded body; or
the at least one wall (31-34; 46; 47; 49) is an insert in a unitary molded body which comprises the outer wall (20) and the end wall (36).

11. A pneumatic system (110; 120; 150; 170) or a pneumatic component (80; 90) for a vehicle (130), comprising the silencer (50) of any one of the preceding claims.

12. A commercial vehicle (130), comprising the silencer (50) of any one of claims 1 to 10, the pneumatic system (110; 120; 150; 170) of claim 11, or the pneumatic component (80; 90) of claim 11.

13. A method of exhausting gas in a vehicle (130), the method comprising:
exhausting the gas through the silencer (50), wherein the silencer (50) comprises a silencer housing component (10) defining a receptacle (15) for the noise dampening mesh material (40), the silencer housing component (10) comprising:
an outer wall (20) extending circumferentially around a center axis (13) of the silencer housing component (10), the outer wall (20) comprising a first axial end (21) and a second axial end (22), wherein a mounting structure (25) for mounting the silencer housing component (10) is arranged at the first axial end (21) of the outer wall (20), wherein several gas outlet passages (23) are formed through the silencer housing component (10) in at least the outer wall (20);
an end wall (26) extending from the second axial end (22) of the outer wall (20) towards the center axis (13); and
a retarding structure (30) comprising at least one wall (31-34; 46, 47; 49) arranged in a concavity (29), wherein the concavity (29) is formed by the end wall (26), and wherein the at least one wall (31-34; 46, 47; 49) projects from the end wall (26) towards the first axial end (21);
wherein exhausting the gas comprises reducing a rate of gas outflow through the several gas outlet passages (23) during at least part of an exhaust operation by the retarding structure (30).

14. The method of claim 13, wherein the retarding structure (30) reduces a pressure drop at least in an initial phase of the exhaust operation.

15. The method of claim 13 or claim 14, wherein the silencer (50) is the silencer (50) of any one of claims 1 to 10.
